# EUROPEAN PATENT SPECIFICATION

(11) **EP 3 139 781 B1**
(45) Date of publication and mention of the grant of the patent: **07.11.2018**
(21) Application number: 15734261.9
(22) Date of filing: 06.05.2015
(51) Int. Cl.: A41H 3/00

(54) **BASIC GUIDE TABLES FOR DEVELOPING TAILOR PATTERNS AND THEIR USE**
GRUNDLEGENDE LEITTABELLEN ZUR ENTWICKLUNG VON SCHNITTMUSTERN UND DEREN VERWENDUNG
TABLES DE GUIDAGE DE BASE POUR LA CRÉATION DE PATRONS SUR MESURE ET LEUR UTILISATION

(30) Priority: 07.05.2014 IT RM20140070
(43) Date of publication of application: 15.03.2017
(73) Proprietor: Maiani, Maria, 00188 Roma (IT)
(72) Inventor: Maiani, Maria, 00188 Roma (IT)
(74) Representative: Pasquino, Fabio
(86) International application number: PCT/IT2015/000124
(87) International publication number: WO 2015/170359

(56) References cited:
- BE-A- 368 641
- JP-U- S 501 147
- JP-U- H03 115 616
- JP-U- S51 161 943

## Description

### Technical field

The present invention relates to basic guide tables for developing tailor patterns and their use.

### Background art

In the state of art a pattern is developed in its single portions not on the base of the real measures of the body of the concerned person but with predefined measures. This requires that a person should try on a garment several times to improve it. By way of example, it is possible to cite how previous inventions disclose means for making tailor patterns for women's garments, in particular for making a "pince" for the chest. These means, generally used for the "pret-a-porter", are considered invalid by the Applicant, because they determine the depth of the "pince" for the breast as a function of the width of the bodice that is made with the measure of the bust circumference without taking into account the extent of the chest circumference. Means used by previous inventions are generally based on the fixed displacement of the line of the front side by 2 cm towards the back, and this creates a default space for the "pince". However by enlarging the line of the shoulder, the shoulder depth is increased; for the Applicant this is not valid for the "pret-a-porter", because predefined measures are inserted.

In fact, the 2 cm fixed displacement of the front hip line to back instead of the real necessary measure creates defects on the garment: for example, on people with big breast and small chest there will be shortage of cloth on the front for the breast and abundance on the back, as well as defects on the armscye; and on people with both large breast and chest the 2 cm fixed displacement of the hip line and the enlargement of the shoulder is excessive, because this creates an amplitude of the bodice on the breast greater than the real need of the person for which the garment is intended.

JP S50 1147 U discloses basic guide tables for developing tailor patterns in particular, a pattern of sweater for woman. A model of the chest with twelve different lines for just as many sizes is provided. JP S50 1147 U states that also a not professional tailor can make a model by selecting only the size adapted to the person that will wear it. According to the teaching of JP S50 1147 U, the model is obtained by only copying all the pattern lines corresponding to a determined size.

Also, BE 368 641 A, JP S51 161943 U, and JP H03 115616 U disclose tailor patterns like JP S50 1147 U. These tailor patterns can be selected on the basis of the size of a person.

### Disclosure of the Invention

The purpose of the present invention is to provide basic guide tables according to claim 1 that may be used to make tailor patterns according to claim 2. With reference to the above mentioned problem of the "pince" for the breast, the present invention provides basic guide tables for developing the tailor pattern and calculates the depth of "pince" for the breast on the difference between the bust circumference and the chest circumference, by using all of the real measures of the person. The width of the shoulders is shown before the "pince" insertion and remains unchanged.

Unlike the prior art, the present invention allows to develop the front and back width of the bodice with the real measure of the chest circumference and not with that of the chest circumference taken as a reference by other methods.

Thanks to the basic guide tables according to the present invention that use the difference between the bust circumference and the chest circumference to determine the depth of the "pince", a front of the bodice is achieved wider than the back by half the difference (since half of the front is made); this difference is variable depending on the size of the breast with respect to the person's chest. The hip line will not displace always by 2 cm, but by the measure calculated on the base of the difference between bust circumference and chest circumference. Since the measure of the back of the bodice is kept the same, the extended width of the front for the breast will be achieved by cutting and enlarging the tailor pattern along the bust width and length lines, not by varying the real measures of the shoulder width already reported on the tailor pattern, as will be seen below.

Thanks to the present invention, even if the person for her constitution has a small chest circumference but a great bust circumference or vice versa, since the "pince" depth is calculated on the real measures there will be neither defects on the back because it will remain unchanged, nor on the front, because it will be widened by the necessary measure, and on the armhole.

If one analyzes the front and the back of the bodice he/she can notice that the half of the real bust circumference has been obtained, and the hip line has shifted towards the back not of a fixed size but of the above described difference between the bust circumference and the chest circumference.

In general, the present invention provides basic guide tables useful to develop tailor patterns for making garments for adults, man and woman, as well as children and adolescents. In addition, the present invention teaches how to use these guide tables. The basic guide tables according to the invention allow the development of tailor patterns that can be used to make tailor patterns in the single portions that make them up, by using the real body measures of the person for which the garment is intended and not predefined measures. The measures of the person are shown as they are for facilitating the development of a tailor pattern that corresponds to a quarter of the real tailor pattern that is worked on the fabric in double.

By way of example, the above mentioned problem, that distinguishes the present invention from the prior art, is addressed in the first and second basic guide tables, which will be described below. Created in them is a set of lines, called as C, which establish for each person the slope of the shoulder line in consequence of the rotation that said shoulder line undergoes due to the insertion of the bodice for the bust. With this elaborated slope a harmonization of the front waist and the back waist lengths, which considers the bust width, is achieved.

### Brief Description of Drawings

The invention will be described hereinafter with reference to the accompanying drawings in which:
Figure 1 is a first basic guide table for developing tailor patterns of front chest and bust with armhole, for woman;
Figure 2 is a second basic guide table for developing tailor patterns of back chest and bust with armhole, for woman;
Figure 3 is a third basic guide table for developing tailor patterns of the front and back base body without the "pince" for the breast, for children and adults;
Figure 4 is a fourth basic guide table for developing tailor patterns of the back base body, for children and adults;
Figures 5 and 6 are a fifth and sixth basic guide tables for developing tailor patterns of the front and back trouser, for children and adults;
Figures 7 and 8 are a seventh and eighth basic guide tables for developing tailor patterns of the front and back sleeve, for children and adults, with a seam;
Figures 9 and 10 are a ninth and tenth basic guide tables for developing tailor patterns of an upper sleeve and an under sleeve, for children and adults;
Figures 11, 12 and 13 are an eleventh, twelfth and thirteenth basic guide tables for developing tailor patterns of various types of neck, for children and adults;
Figure 14 is a fourteenth basic guide table for developing tailor patterns of the front base body for children and adults in a variant compared to that of the third table in Figure 3;
Figure 15 is a fifteenth basic guide table for developing tailor patterns of the back base body, for children and adults, in a variant compared to that of the fourth table in Figure 4;
Figures 16 and 17 are a sixteenth and seventeenth basic guide tables for developing tailor patterns of the sleeve with front and back seam, for children and adults, on the base of customized measures;
Figures 18 and 19 are an eighteenth and nineteenth basic guide tables for developing tailor patterns of the front and back crotch for children and adults on the base of customized measures;
Figures 20 and 21 are a twentieth and twenty-first basic guide tables for developing tailor patterns of the front and back of the upper sleeve and under sleeve, for children and adults, with two seams.

### Description of a preferred embodiment of the invention

For an easy disclosure of the invention, the lines on the basic guide tables are indicated by letters. As regards the subsequent use of the basic guide tables according to the invention for developing a tailor pattern is important to take all measures listed below on the undressed body of a person:
neck circumference, chest circumference, bust circumference, waist circumference, iliac circumference, hip circumference, thigh circumference, arm circumference, circumference below the breast, armhole, front waist length, back waist length, breast length, iliac length (distance between iliac circumference and waist circumference), hip length (distance between hip circumference and waist circumference), thigh length (distance between thigh circumference and waist circumference), waist-knee length, crotch length, crotch height, elbow-wrist length, total sleeve length, front shoulder width, back shoulder width, bust width.

In use, a paper sheet for tailor patterns of variable sizes according to the need is taken and placed on the basic guide table, with the right angle of the paper sheet corresponding to the straight edges of the basic guide table, for example: front center, back center, sleeve front line, sleeve back line, front sleeve center, back sleeve center. A subject traces lines and points indicated on the basic guide tables corresponding to the measures taken on the person.

In the their real dimensions, the basic guide tables represent always the half width of the front and the half width of the back, that is a quarter of the total circumference: this because the tailor patterns are placed on double fabric.

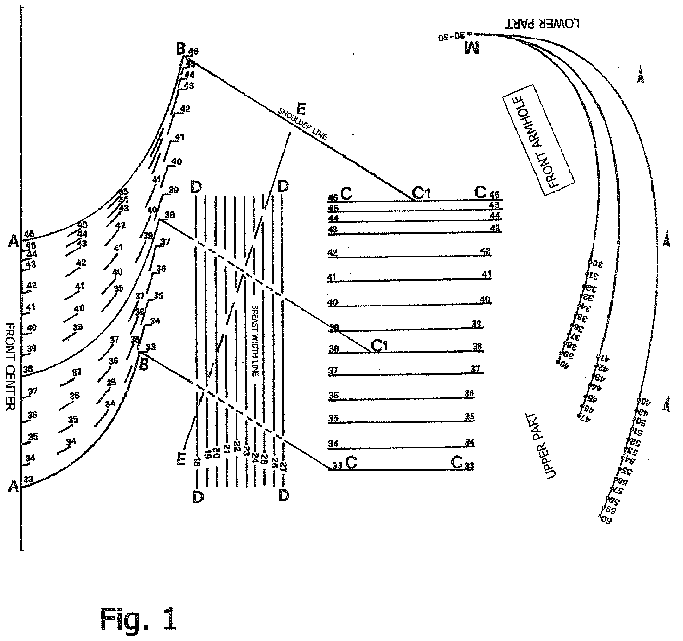

Reference is made to the first basic guide table, shown in Figure 1.

This table is arranged for developing the front bodice with the insertion of the "pince" for the breast and is therefore suitable to teenagers as well as to adult women of any physique.

The first basic guide table has:
- a set of curved lines A-B of the neck circumference, that is, the measure of the neck circumference,
- a set of horizontal lines C, perpendicular to the front center line, which express the measure of the neck circumference, necessary to draw the shoulder line with the right slope,
- parallel lines designated as lines B-C1, which represent the shoulder line; by way of example three of them are shown,
- a line designated as E, which intersects the shoulder lines at a point,
- a set of vertical lines designated as D, which represent the bust width lines,
- on the opposite side to the set of curved lines A-B, three curve lines, which represent the circumference of the front armhole, formed by an upper part and a lower part ending in a point M.

The use of this table is the following.

After having placed the paper sheet on the front center line, the neck circumference line A-B, corresponding to the neck circumference of the person, is copied. This line A-B has two ends, that is the point A which is the low neck and the point B which is the vertex of the neck-shoulder angle.

The bust width line D, i.e. the distance between the breasts is traced on the tailor pattern. The bust length line terminates on the bust width line D as explained later.

With the squad resting on the line C at right angles to the front center, the point C1 can be obtained, by inserting the measure of half front shoulder width. Connecting the point C1 to the point B, the vertex of the neck-shoulder angle, the shoulder line can be drawn with the right slope.

The intersection point of the shoulder line is identified on the line E; from this point the measure of the bust length is traced until it intersects the bust width line D. The point of intersection between the line E and line D represents the full breast.

Then the hip line is traced parallel to the front center and distant from this a quarter of chest circumference; the hip line will be 20 cm long and distant 10-15 cm from the above defined point C1.

Then the armhole is inserted: the point C1 is made coincident with the dot corresponding to the size of the armhole of the person.

The upper part of the armhole being fixed, the dot M overlaps the hip line.

Then the armhole circumference of the real measure of the person is copied.

At this point, it is necessary to cut the tailor pattern along the bust width and length lines in order to insert the depth of the "pince". These two parts are spaced parallel of half the difference between the bust circumference and the chest circumference. The subject staples the two parts on another paper sheet and proceed with the development of the breast "pince" that is obtained by closing the depth of the "pince", i.e. connecting the top of the breast to the vertex of the shoulder line of the second part of the tailor pattern. If the above mentioned difference between the bust circumference and the chest circumference is great, the "pince" will be great, if it is small, the "pince" will be small.

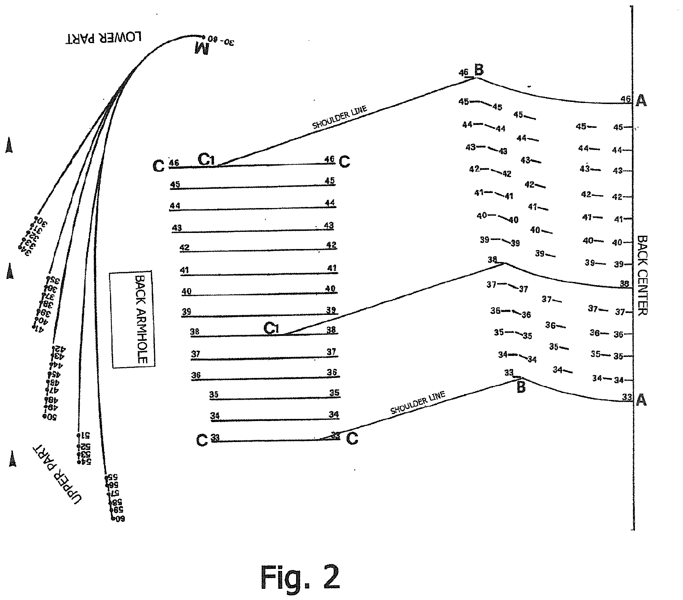

Reference is made now to the second basic guide table, shown in Figure 2. This table is arranged for developing the back bodice with armhole, for teenager and woman, for the back bodice with armhole.

The second basic guide table has:
- a set of curved lines A-B (neck circumference) which express the measure of the neck circumference. The point A represents the low neck, the point B the neck-shoulder angle,
- a set of horizontal lines C, i.e. perpendicular to the back center, which express the measure of the neck circumference and are necessary to draw the shoulder line with the right slope,
- parallel lines denominated as lines B-C1, which represent the shoulder line; by way of example only three of them are shown,
- on the opposite side to the set of curved lines A-B, three curve lines which represent the circumference of the front armhole that is formed by an upper part and a lower part ending in a point M.

The use of this table is the following.

After having positioned the straight edge of the paper sheet on the back center, the subject traces one of the curved lines A-B and one of the lines C for the shoulder slope, corresponding to the real measure of the neck circumference of the person. With the squad resting on the C line at right angle to the back center, half of the back shoulder width is measured to obtain a point C1. By connecting the highest point of the neck roundness, namely the point B, to the just obtained point on the line C the shoulder line is obtained with the right slope. The hip line is drawn parallel to the back center and distant from this a quarter of the chest circumference of the person; it will be about 20 cm long and 10-15 cm distant from the point C1. The back armhole is inserted with the same procedure explained with reference to the first basic guide table.

If the tailor pattern developed with the first basic guide table is compared with that developed with the second basic guide table one can observe that the tailor pattern of the first table guide base is greater than that achieved with the second one.

By summing the width of the front tailor pattern with that of the back the half of the bust circumference is obtained.

So the measure of the front bodice will not be exactly a quarter of the bust circumference but, according to the depth of the "pince" customized for the breast, the front body may be 1,5-2-2,5 cm etc. wider and the back body 1,5-2-2,5 cm etc. smaller.

So the front tailor pattern is not larger than the back tailor pattern by a fixed measure but varies according to the depth of the "pince", as mentioned above.

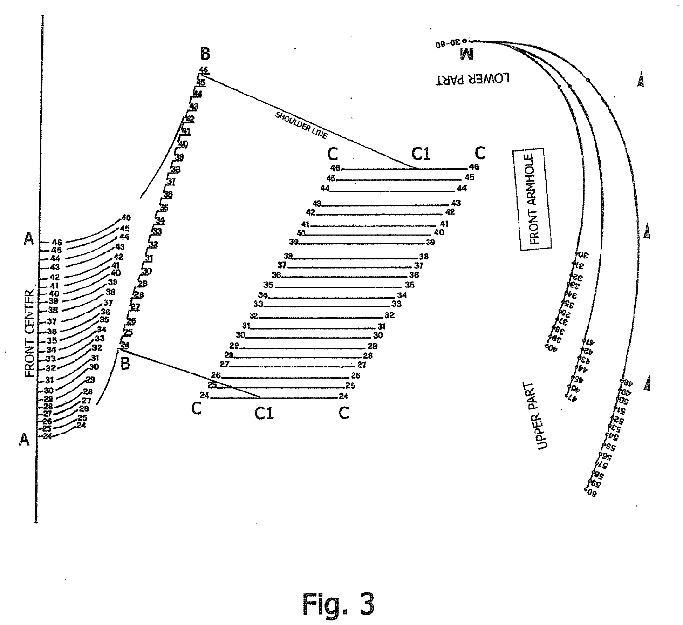

Reference is made to the third basic guide table, shown in Figure 3.

This table is arranged for developing the front bodice in which the insertion of the "pince" for the breast is not provided and is, therefore, suitable to make tailor patterns for children to adults.

The third basic guide table has:
- a set of interrupted curved lines A-B which express the measure of the neck circumference from 24 cm to 46 cm and are created to achieve the neck roundness. The point A represents the low neck, the point B the neck-shoulder angle;
- a set of straight lines G corresponding to the neck circumference which will be used to insert on the tailor pattern the shoulder width and to determine the real shoulder slope of the person;
- on the opposite side to the set of curved lines A-B, three curve lines which represent the roundness of the front armhole, formed by an upper part and a lower part ending in a point M. On the roundness of the three curved lines a dot is inserted to easy make raglan, kimono and large armhole sleeves.

The use of this table is the following.

After having positioned properly the straight edge of the paper sheet on the front center line of the third basic guide table, the first part of the neck roundness A-B is traced on the base of the measure of the neck circumference. In order to obtain the complete roundness, it is sufficient just to prolong the roundness of the first section until it meets the line B-B in the point corresponding to the neck measure.

With the squad resting on the C line between the front center and the line G, which corresponds to the measure of the neck circumference, half of the real front shoulder width of the person is traced; the so obtained intersection point C1, connected to the point B, allows to draw the shoulder line with the right slope.

In order to complete the development of the front bodice the hip line is traced parallel to the front center and distant from this a quarter of the bust circumference; it will be about 20 cm long and 10-15 cm distant from the point C1.

Then the armhole is traced: the shoulder line vertex (point C1) overlaps with the dot indicated in the upper part of the third basic guide table corresponding to the real size of the armhole of the person. The subject matches the dot M at the bottom of the third basic guide table with the hip line. Then armhole roundness is copied.

From the vertex B of the neck-shoulder angle the measure of the front waist length is traced; once found the point, the horizontal waist line can be drawn until it crosses the hip line.

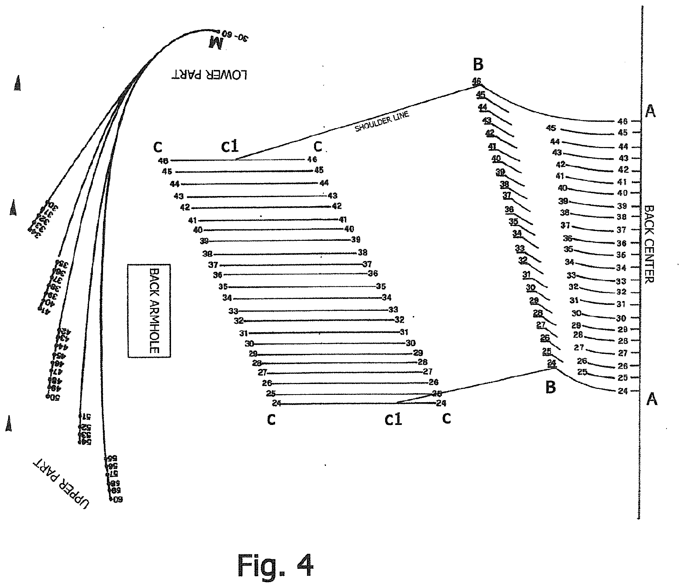

Reference is made now to the fourth basic guide table, shown in Figure 4.

This table is arranged for developing the back base body, suitable to make tailor patterns from children to adults.

The fourth basic guide table has:
- a set of interrupted curved lines A-B which express the measure of the neck circumference from 24 cm to 46 cm and are created to achieve the neck roundness. The point A represents the low neck, the point B the neck-shoulder angle,
- a set of straight lines G corresponding to the neck circumference which will be used to trace on the tailor pattern the shoulder width and to determine the real shoulder slope of the person,
- on the opposite side to the set of curved lines A-B, three curve lines which represent the roundness of the back armhole, formed by an upper part and a lower part ending in a point M.

The use of this table is the following.

After having positioned appropriately the straight edge of the paper sheet on the back center line of the fourth basic guide table, the first part of the neck roundness A-B is traced on the base of the measure of the neck circumference.

In order to obtain the complete roundness it is sufficient just to prolong the roundness of the first section until it meets the point B corresponding to the neck measure.

With the squad resting on the back center and the line G, which corresponds to the measure of the neck circumference, half of the real back shoulder width of the person is traced; the so obtained intersection point C1, connected to the point B allows to draw the shoulder line with the right slope.

In order to trace the horizontal back waist, the same front waist length can be used since the two tailor patterns are of the same length.

With the slope processed with the present invention (line G) there is achieved a harmonization of the front and the back waist lengths, already considered for the development of a flat base bodice where the insertion of the "pince" for the breast is not provided.

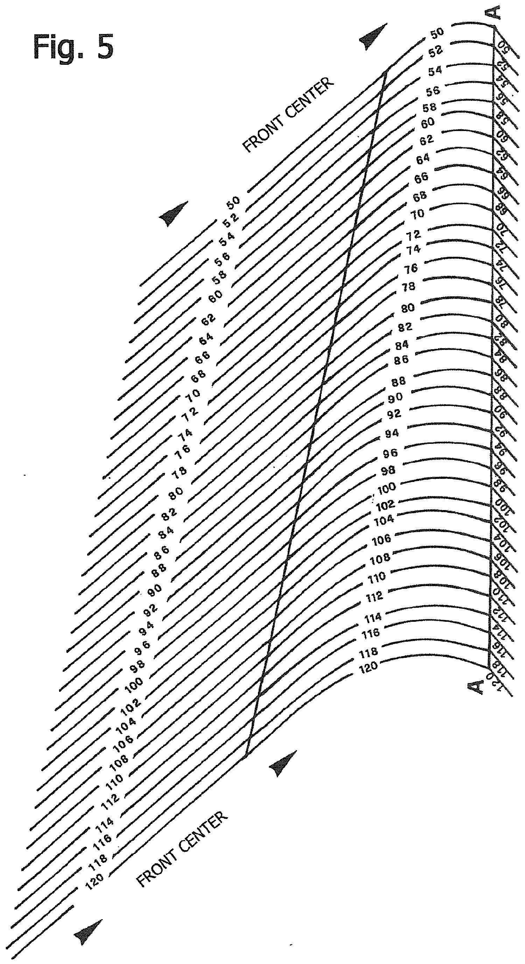

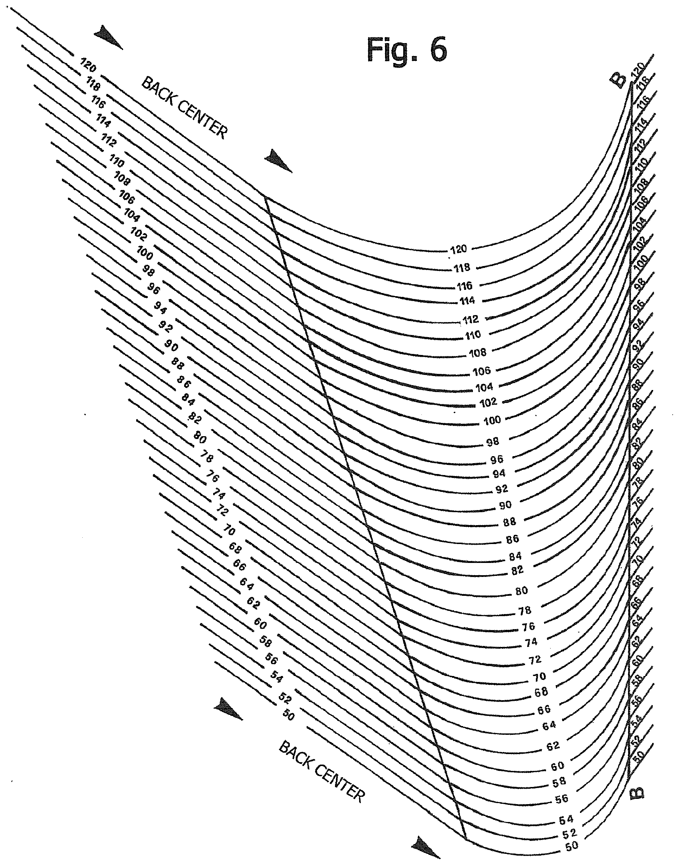

Reference is made now to the fifth and sixth basic guide table, shown in Figures 5 and 6.

These tables are arranged for developing the crotch of the trousers for children to adults on the base of customized measures.

These tables have been designed to help the subject using the tailor pattern to obtain a precise roundness of the crotch.

The numbers indicated on the lines, curves and segments express the measure of the hip circumference.

The fifth basic guide table has:
- a set of front center lines forming a right angle with the segment A,
- a set of curves developed within the right angle formed by the front center lines and by the segment A, which express the roundness of the crotch studied on the depth of the person according to the real measure of the hips.

The sixth basic guide table has:
- a set of back center lines forming a right angle with the segment B,
- a set of circumferences developed within the right angle formed by the back center lines and by the segment B, which express the roundness of the crotch studied on the depth of the person according to the real measure of the hips.

The use of these tables is the following.

A paper sheet for tailor patterns is taken and at 10 cm from the long side of the paper sheet a line 35-40 cm long, parallel to this, is traced, thus obtaining the center front line.

In parallel to the front center line just drawn, at a distance of the real measure of half hip circumference, another line, equal to the previous one in length, is drawn; this line will become the back center line.

The horizontal crotch line is drawn starting at a right angle with the straight edge of the paper sheet, passing through the end of the front and back center lines, and then continuing for about 20 cm beyond the back center line.

Then the subject can proceed with the insertion of the front crotch roundness by the fifth basic guide table and the back crotch roundness by the sixth basic guide table corresponding to the real measure of the hip circumference of the person.

The paper sheet is positioned on the fifth basic guide table for the front body, and the 10 cm long segment (outside the rectangle) of the horizontal crotch line is made coincident with the segment A of the fifth basic guide table and the front center of the paper sheet with that of the fifth basic guide table.

The front crotch roundness has to be traced starting from segment A and intersecting the front center line.

As for the back the subject operates in the same way, with the care that the segment B is placed on the crotch horizontal line in the tract outside the rectangle and making coincident the two back center lines (the one of the paper sheet and the one of the sixth basic guide table).

Then the back crotch roundness is traced.

The hip line is traced parallel to the straight edge of the paper sheet, not exactly in the middle of the rectangle (half hip circumference) but shifted by 1 cm towards the front center.

Then the horizontal waist line can be traced after inserting the crotch length, previously measured on the person; the crotch length will be divided by 2 and inserted along the front and back center lines starting from the segments A and B not with the same extension but with a 3 cm longer extension on the back for the crotch roundness that is necessary for the projection of the butt.

Then the two found vertices have to be connected with a line in order to obtain the horizontal waist.

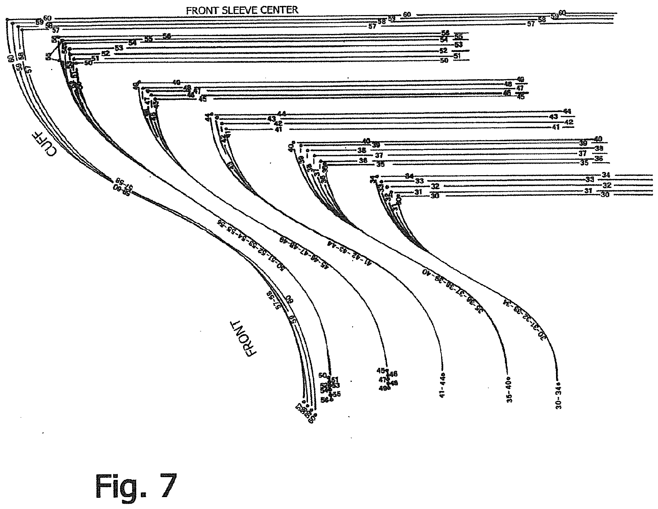

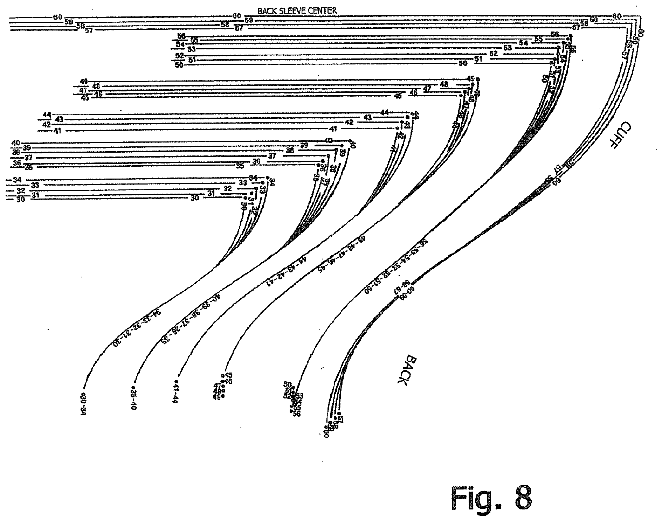

The trouser leg will be completed by inserting the lengths and widths of the person. Reference is made now to the seventh and eighth basic guide tables, shown in Figures 7 and 8.

These basic guide tables are arranged for developing the tailor pattern of the classic sleeve with one seam, and are suitable for children to adults on customized sizes (custom-made or at sizes).

The seventh and eighth basic guide table have:
- a set of S shaped curved lines, distributed in 6 groups, which express the measures of the armhole;
- a set of vertical lines, distributed in 6 groups, which express the front sleeve center on the seventh basic guide table and the back sleeve center on the eighth basic guide table and represent the straight edge of the sleeve;
- the numbers and dots indicated on lines and circumferences (cuff) express the real measure of the armhole of the person.

The use of these tables is the following.

After taken half paper sheet for tailor patterns, a line parallel to the straight edge of the paper sheet is traced at the center; this line will become the sleeve center. The seventh basic guide table is positioned under the paper sheet so that the sleeve center line of the paper sheet is made coincident with the one on the seventh basic guide table (front) corresponding to the real size of the armhole.

The dot on the bottom, placed at the beginning of the armhole roundness, representing the width of the front sleeve, is taken and the armhole roundness of the person is traced.

The eighth basic guide table is positioned under the paper sheet so that the sleeve center line of the paper sheet is made coincident with that of the eighth basic guide table (back) corresponding to the real size of the armhole; and in the upper part of the sleeve the cuff roundness is aligned with that previously designed. The dot on the bottom, placed at the beginning of the armhole roundness, representing the width of the front sleeve, is taken and the armhole roundness of the person is traced.

This construction of two separate parts (front and back) allows to obtain a precise sleeve center, designed perpendicular to the sleeve width so as not to have problems at the moment of assembly. The sleeve center is the straight edge that serves for the position on the fabric; the sleeve will be completed by inserting real lengths and width of the sleeve.

The two parts of the classic sleeve will be used, depending on the fashion, for making raglan sleeves, balloon sleeves, glove sleeves etc...

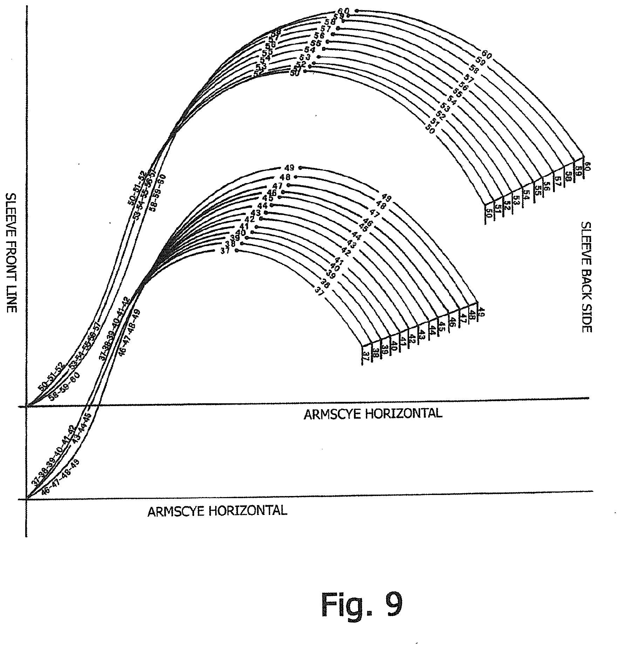

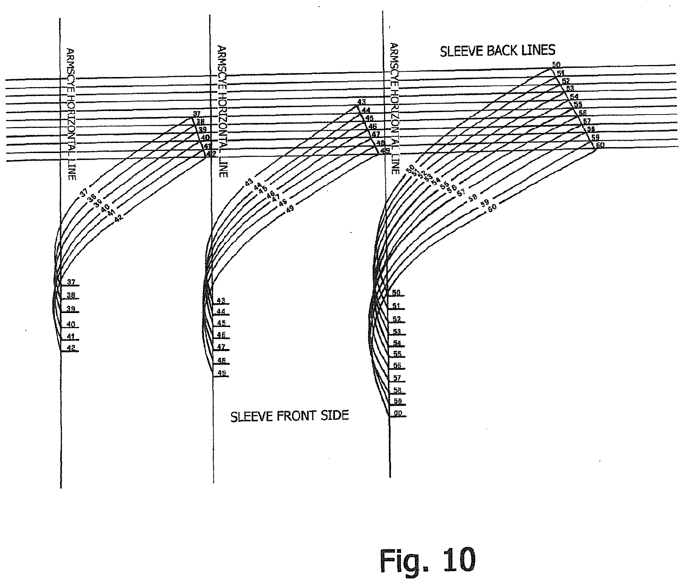

Reference is made now to the ninth and tenth basic guide tables, shown in Figures 9 and 10.

These basic guide tables, the ninth being for the upper sleeve, the tenth for the under sleeve, are arranged for developing the custom-made tailor pattern of the sleeve with two seams for jackets, overcoats, winter coats etc.

The ninth basic guide table has:
- two groups of curved lines representing the roundness of the upper sleeve (cuff) corresponding to the real size of the armhole, interrupted by a dot representing the sleeve center;
- two groups of vertical segments that represent the sleeve back side and express the real measure of the armhole.
- on the left hand a sleeve front line on which the cuff roundness begins;
- two armscye horizontal lines in order to complete the sleeve.

The tenth basic guide table has:
- three sets of curved lines which represent the armscye roundness corresponding to the real measure of the armhole;
- three groups of vertical segments that represent the sleeve front side and express the real measure of the armhole;
- a set of vertical lines that represent the sleeve back line;
- three armscye horizontal lines in order to complete the sleeve.

The use of the ninth basic guide table is the following.

The subject takes a quarter of paper sheet for tailor patterns and places it on the ninth basic guide table, upper sleeve. The straight edge of the paper sheet is made coincident with the sleeve front line taken on the ninth basic guide table.

The "back side" segment shown on the ninth basic guide table is traced, as well as the cuff roundness and the dot which represents the sleeve center and the armscye horizontal line, all corresponding to the real measures of the armhole of the person. The sleeve center line is drawn starting from the dot taken on the cuff, in parallel to the sleeve front line, as long as the sleeve length of the person; the elbow length is inserted on the same line drawn. The rim horizontal line and the elbow horizontal line are drawn parallel to the armscye; the "back side" segment is prolonged so that it intersects the rim line.

The use of the tenth basic guide table is the following.

A quarter of paper sheet for tailor patterns is taken and is placed on the tenth basic guide table for the under sleeve.

The straight edge of the paper sheet line is made coincident with the sleeve back line taken on the tenth basic guide table. The "back side" segment indicated on the tenth basic guide table is traced. Both the armscye roundness and the armscye width, all corresponding to the real size of the armhole of the person, are traced.

The "front side" segment is prolonged parallel to the sleeve front line; the two tailor patterns for upper sleeve and under sleeve are placed side by side along the back lines and aligned with the armscye horizontal line.

The rim and elbow horizontal lines are prolonged on the tailor pattern of the under sleeve in parallel with the armscye horizontal line.

This sleeve will be restricted according to preference and fashion.

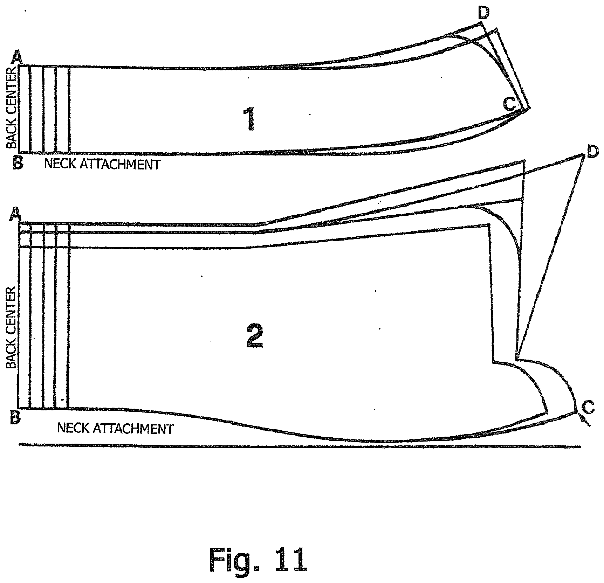

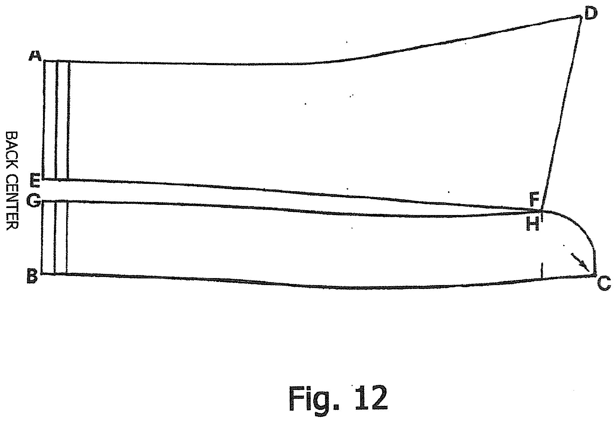

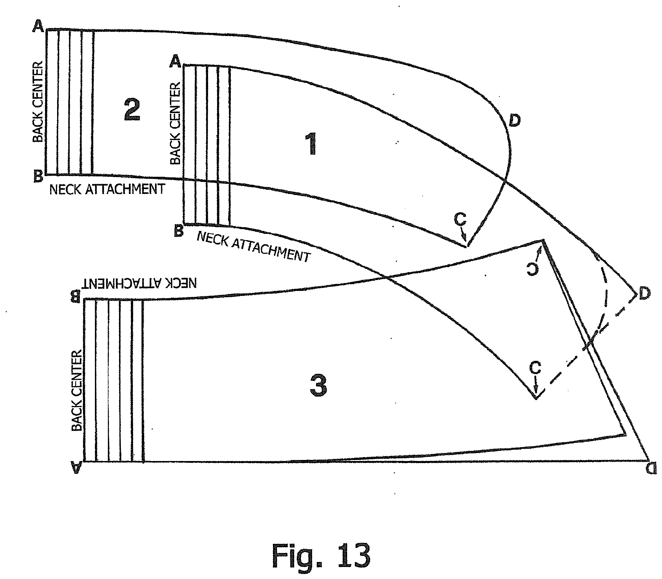

Reference is made now to the eleventh, twelfth and thirteenth basic guide tables, shown in Figures 11, 12, and 13.

These basic guide tables are used for making some types of more common necks. The necks depicted in these tables are with and without button band. The eleventh, twelfth and thirteenth tables base are extremely simplified; in order to achieve the desired type of neck it is sufficient to copy it onto a paper sheet for tailor patterns and give the measure of half neck circumference of the person. Every single type of neck depicted on these basic guide tables has:
- back center line A-B
- neck attachment line B-C
- neck outer edge A-D
- neck tip and / or roundness D-C

The eleventh basic guide table has:
1- "Korean" type neck in different shapes, sizes, tips and roundness.
2- shirt neck with built-in band and buttons in different forms, measures, tips and roundness.

The twelfth basic guide table has:
1- shirt neck with detached band that has two lines EF and GH for joining the two parties, in addition to the four common lines.

The use of the eleventh and twelfth basic guide tables is the following. Both the eleventh and the twelfth basic guide table are used by copying on a paper sheet for tailor pattern the type of chosen neck and coping along the line B-C (neck attachment) half neck circumference of the person plus the overlap for the buttons. The thirteenth basic guide table, which is used to make necks for various clothing without button band with various tip forms and larger or smaller roundness, has:
1- "peter pan" neck that rises a little (less approached to the neck)
2- "peter pan" neck that rises more (more approached to the neck)
3- "standing" shirt neck in various tip forms, that are larger or smaller. Presented below is a set of basic guide tables for man in order to develop the tailor pattern for tailored clothing (haute couture) and pret a porter (sizes) for adolescents and man.

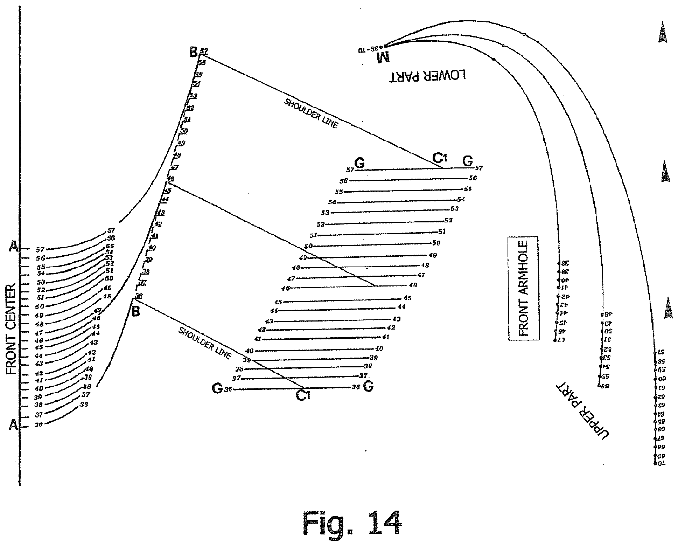

The fourteenth basic guide table, shown in Figure 14, is a flat base, arranged for developing a tailor pattern of the front body for adolescents and man. If compared with the fourth basic guide table the slope of the shoulders and the notch in the lower neck have been increased.

The fourteenth basic guide table has:
- a set of interrupted curved lines A-B that express the measure of the neck circumference from 36 cm to 57 cm; they are created to help the subject using the tailor pattern to make the neck roundness. The point A represents the lower neck, the point B the neck-shoulder angle;
- a set of straight lines G corresponding to the neck circumference which will be used to insert the width of the shoulders on the tailor pattern, and to establish the real slope of the person's shoulder;
- on the opposite side to the set of curved lines A-B, three curved lines representing the front armhole roundness, for the measures from 38 cm to 70 cm, the front armhole being formed by an upper part and a lower part marked by the point M. Inserted on the roundness of the three curved lines is a dot for easy making raglan, kimono and large tailored sleeves.

The use of the fourteenth basic guide table is the following.

The paper sheet is positioned properly on the center front line of the fourteenth basic guide table, and the first part of the neck roundness A-B is traced on the base of the measure of the neck circumference. In order to achieve the complete neck roundness it is sufficient to prolong the roundness of first tract up to meet a point B corresponding to the neck size.

The squad is positioned at right angles on the front center and the line G corresponding to the measure of the neck circumference, and half of the real front shoulder width of the person is traced; after connecting the point C1 as found to the point B the shoulder line with its right slope can be drawn.

To complete the front body, the hip line is drawn parallel to the front center, at a distance of a quarter chest circumference, at 10-15 cm from the point C1 and 20 cm long.

Now the armhole is inserted: the vertex of the shoulder line (point C1) is made coincident with the dot indicated at the top in the fourteenth basic guide table corresponding to the real size of the person's armhole. The dot M at the bottom of the fourteenth basic guide table is made coincident with the hip line. The armhole roundness is copied.

From the point B, i.e. the neck-shoulder angle, the front waist length is inserted; once found this point the waist horizontal line is traced to intersect the hip line.

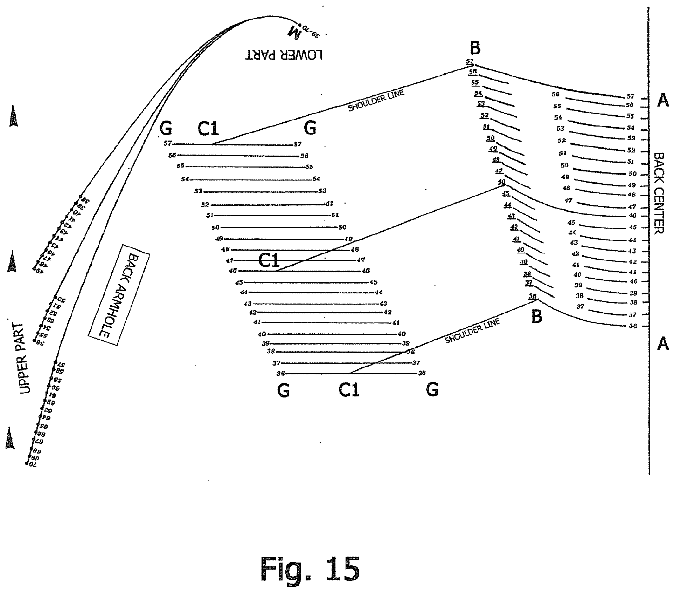

Reference now is made to the fifteenth basic guide table, shown in Figure 15.

This basic guide table is a flat base, arranged for developing a tailor pattern of the back body for adolescents and man. If compared with the fourth basic guide table the slope of the shoulders and the notch in the lower neck have been increased.

The fifteenth basic guide table has:
- a set of interrupted curved lines A-B that express the measure of the neck circumference from 36 cm to 57 cm; they are created to help the subject using the tailor pattern to make the neck roundness. The point A represents the lower neck, the point B the angle neck-shoulder;
- a set of straight lines G corresponding to the neck circumference which are used to insert the width of the shoulders on the tailor pattern, and to establish the real slope of the person's shoulder;
- on the opposite side to the set of curved lines A-B, three curved lines, for measures from 38 cm to 70 cm, representing the back armhole roundness, formed by an upper part and a lower part marked by the point M.

The use of the fifteenth basic guide table is the following.

The paper sheet is properly positioned on the back center line in the fifteenth basic guide table, and the first part of the neck roundness A-B is traced on the base of the measure of the neck circumference. To achieve the complete neck roundness it is sufficient to prolong the roundness of the first tract to intersect the point B corresponding to the neck measure.

The squad is positioned at right angles on the front center and the line G that corresponds to the measure of the neck circumference, and half of the real shoulder width of the person is traced; after connecting the point C1 as found to the point B the shoulder line can be drawn with its right slope.

To draw the back waist horizontal line the same front waist length is inserted, the two tailor patterns being of the same length for adolescents and man.

With the slope specified (lines G) the harmonization of the front and the back waist length, which is already considered for the development of the man base, is obtained.

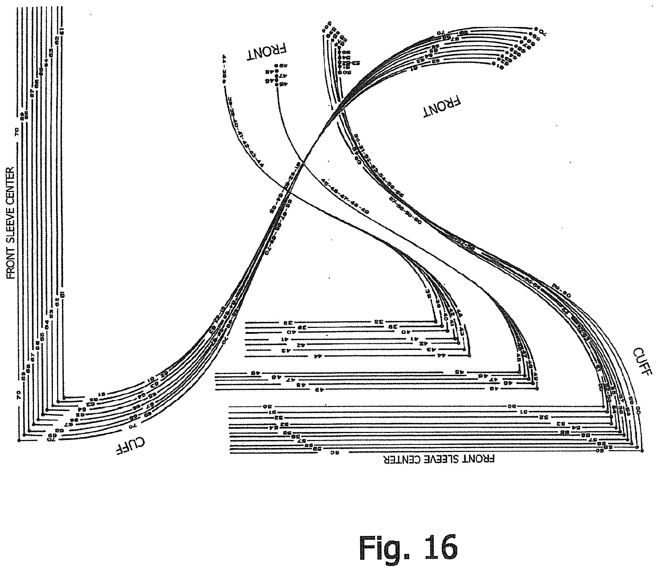

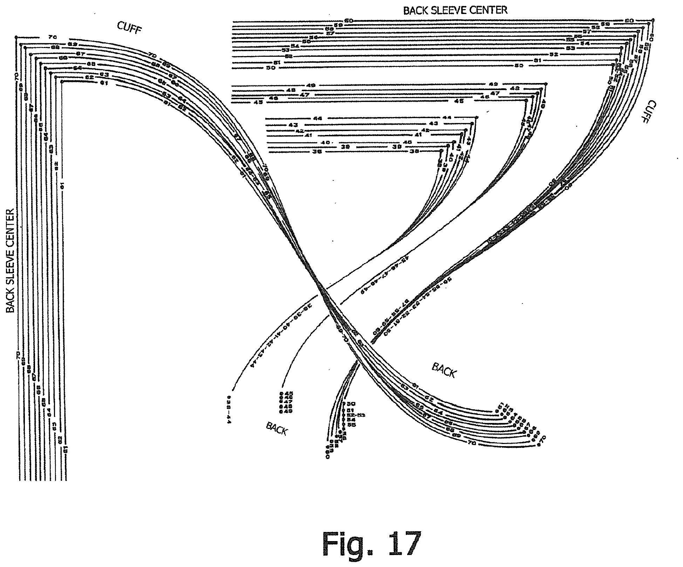

Reference is made now to the sixteenth and seventeenth basic guide tables, shown in Figures 16 and 17.

The sixteenth and seventeenth basic guide tables are used for developing the tailor pattern for the classical sleeve with one seam suitable for adolescents and man, on customized sizes (custom-made or at sizes).

The sixteenth and seventeenth basic guide table are:
- a set of S shaped curved lines expressing the measures of the armhole from 38 cm to 70 cm, distributed in four groups; the group ranging from 61 cm to 70 cm intersects the other three groups in the armscye;
- a set of vertical lines, distributed in 4 groups, which express the front sleeve center on the sixteenth basic guide table and the back center sleeve on the seventeenth basic guide table, and represent the straight edge of the sleeve.

The numbers and the dots indicated on lines and curves (cuff) express the real measure of the armhole of the person.

The use of the sixteenth basic guide table is the following.

Half paper sheet for tailor patterns is taken, and a central line parallel to the straight edge of the paper sheet is drawn; this line will become the sleeve center. The sixteenth basic guide table is positioned under the paper sheet in order to make coincident the sleeve center line of the paper sheet with that on the sixteenth basic guide table (front) corresponding to the real size of the armhole.

The dot on the bottom is taken which is placed at the beginning of the roundness of the armhole, representing the width of the sleeve front, and the roundness of the armhole on the person is traced.

The use of the seventeenth basic guide table is the following.

The seventeenth basic guide table (back) is positioned under the paper sheet in order to make coincident the sleeve center line of the paper sheet with that on the seventeenth basic guide table (back) corresponding to the real size of the armhole. In the top of the sleeve, the cuff roundness is aligned with that previously designed. The dot down, which is placed at the beginning of the armhole roundness and represents the width of the sleeve back, is taken, and the armhole roundness of the person is traced.

This construction of two separate parts (front and back) allows to obtain a precise sleeve center, designed perpendicular to the width of the sleeve so as not to have problems at the time of the assembly. The sleeve center is the straight edge that serves for the position on the fabric; the sleeve will be completed by inserting the real lengths and width of the sleeve.

The two parts of the classic sleeve will be used, depending on the fashion, for making sleeves for shirts, glove sleeves, raglan sleeves, etc.

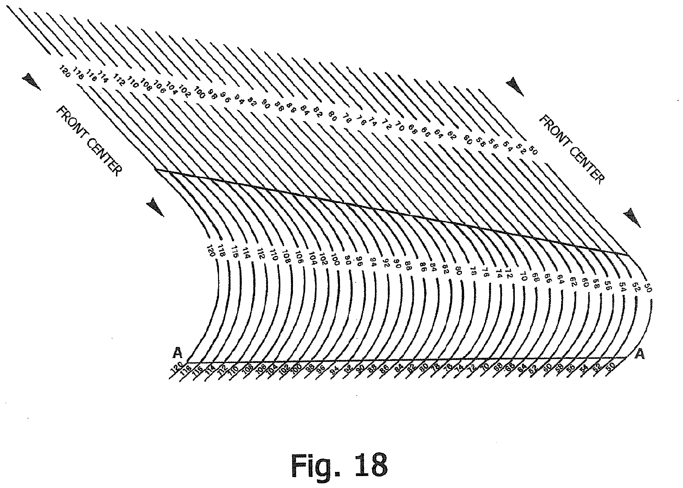

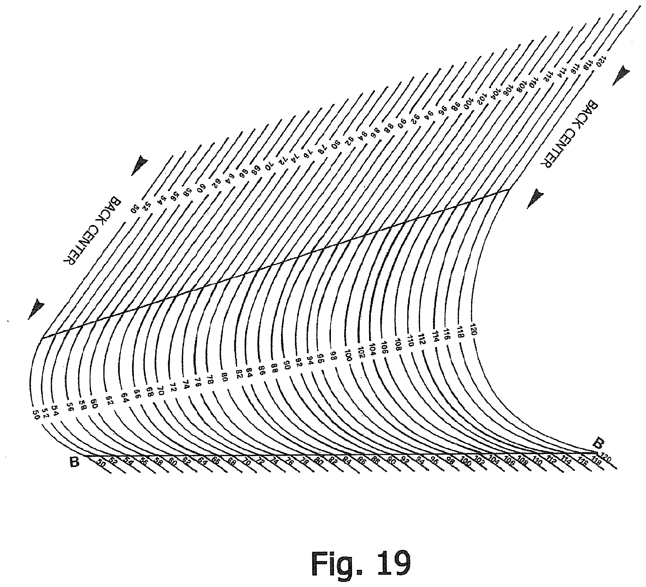

Reference is made now to the eighteenth and nineteenth basic guide tables, shown in Figures 18 and 19.

The eighteenth and nineteenth basic guide tables are used for developing the tailor pattern of the trouser crotch for man and adolescents, on customized sizes (custom-made or at sizes). They are designed to help the subject to achieve a precise crotch roundness. The numbers indicated on the lines, circumference and segments express the measure of the hip circumference.

The eighteenth basic guide table has:
- a set of front center lines forming a right angle with the segment A;
- a set of magnified circumferences as compared with the fifth basic guide table to get more space on the front for adolescents and man; they are developed inside of the right angle formed by the front center lines and by the segment A and express the crotch roundness developed on the depth of the person in relation to the real measure of the hips for adolescents and man.

The nineteenth basic guide table has:
- a set of back center lines forming a right angle with the segment B;
- a set of circumferences developed within the right angle that are formed by the back center lines and the segment B and express the crotch roundness studied on the depth of the person in relation with the real measure of the hips.

The use of the eighteenth and nineteenth basic guide tables are the following.

A paper sheet for tailor patterns is taken, and at 10 cm from the long side of the paper sheet a line parallel to this, 35-40 cm long, is drawn, so to obtain the front center line.

Parallel to the front center line just drawn, at a distance of the measure of the real half hip circumference, another line of the same length of the previous is drawn that will become the back center line.

Starting at a right angle with the straight edge of the paper sheet, passing through the end of the front center and back center lines, the horizontal crotch line is drawn that is continued for about 20 cm beyond the back center line.

Then the front crotch roundness is inserted with the eighteenth basic guide table as well as the back roundness of the crotch with the nineteenth basic guide table corresponding to the real measure of the hip circumference of the person.

The paper sheet is positioned over the eighteenth basic guide table for the front, by making coincident the tract of 10 cm (outside the rectangle) of the crotch horizontal line with the segment A of the eighteenth table guide base and the front center of the paper sheet with that of the eighteenth basic guide table.

The front crotch roundness is traced by starting from the segment A to intersect the front center line.

For the back the procedure is the same however with the care that the segment B is placed on the crotch horizontal line in the tract outside the rectangle. The two back center lines, i.e. that of the paper sheet and that of the nineteenth basic guide table are made coincident.

The back crotch roundness is traced.

The hip line is drawn, parallel to the straight edge of the paper sheet, not exactly in the middle of the rectangle (half hip circumference) but displaced 1 cm towards the front center.

The horizontal waist is drawn after inserting the crotch length, previously measured on the person. This length will be divided by 2 and inserted along the front and back center lines starting from the segments A and B not to the same extent but to an extent greater than 3 cm on the back due to the roundness of the crotch needed for the projection of the butt.

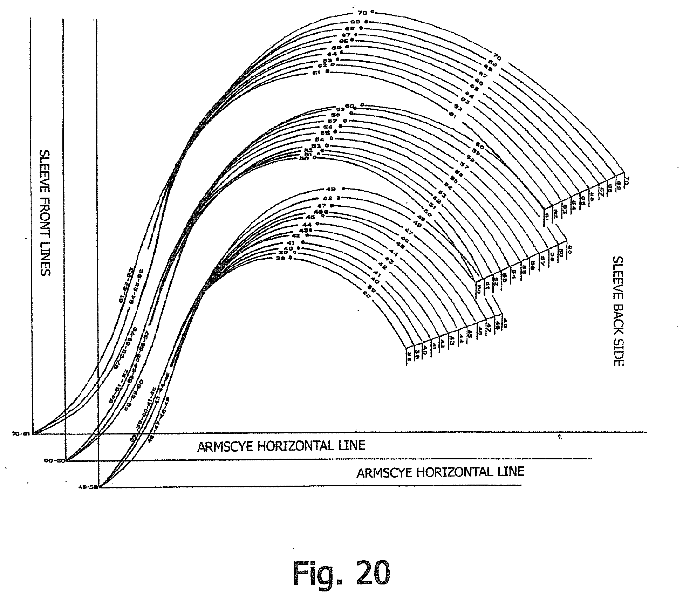

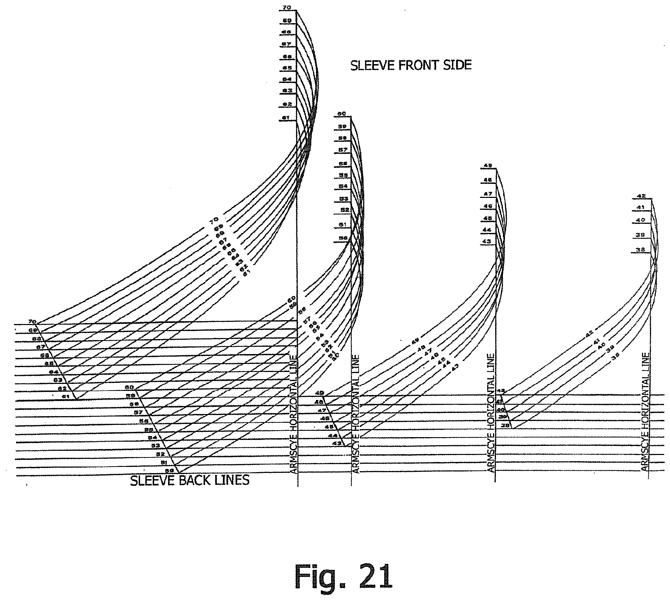

The two vertices as found are joined with a line so to obtain the horizontal waist. The trouser leg will be completed by inserting lengths and widths of the person. Reference is made now to the twentieth and twenty-first basic guide tables, shown in Figures 20 and 21.

The twentieth and twenty-first basic guide tables, respectively upper sleeve and under sleeve, are used for developing the tailor pattern of the sleeve with two seams for jackets, coats, raincoats, etc., for adolescents and man.

The twentieth and twenty-first basic guide tables have:
Twentieth basic guide table (upper sleeve).
- three groups of curved lines representing the upper sleeve roundness (cuff) corresponding to the real measures of the armhole from 38 cm to 70 cm, interrupted by a dot representing the sleeve center.

The cuffs of the upper sleeve on the twentieth basic guide table have been modified by changing the depth (roundness) and their width:
- on the right hand three groups of vertical segments that represent the sleeve back side and express the real measure of the armhole;
- on the left hand three sleeve front lines on which the cuff roundness begins;
- three armscye horizontal lines for completing the sleeve.

Twenty-first basic guide table (under sleeve):
- four groups of curved lines that represent the armscye roundness corresponding to the real measures of the armhole from 38 cm to 70 cm;
- on the right hand four groups of vertical segments that represent the sleeve front side and express the real measure of the armhole;
- on the left hand a set of vertical lines representing the sleeve back line;
- four armscye horizontal lines for completing the sleeve.

The use of the twentieth basic guide table is the following.

A quarter of paper sheet for tailor patterns is taken, and it is positioned on the twentieth basic guide table, upper sleeve. The straight edge of the paper sheet is made coincident with the sleeve front line taken on the twentieth basic guide table. The "back side" segment, indicated on the twentieth basic guide table, is traced, as well as the roundness of the cuff and the dot representing the sleeve center and the armscye horizontal line, all corresponding to the real measure of the armhole of the person or of the size.

The sleeve center line is drawn from the dot taken on the cuff, parallel to the sleeve front line, as long as the sleeve length of the person; the elbow length is inserted on the same line drawn.

The horizontal rim and the horizontal elbow are drawn parallel to the armscye; the back side segment is prolonged to intersect the rim line.

The use of the twenty-first basic guide table is the following.

A quarter of paper sheet for tailor patterns is taken, and it is positioned on the twenty-first basic guide table, under sleeve.

The straight edge of the paper sheet is made coincident with the back sleeve line taken on the twenty-first basic guide table.

The "back side" segment indicated on the twenty-first basic guide table is traced, as well as the armscye roundness and the armscye horizontal line, all corresponding to the real measure of the armhole of the person or of the size.

The "front side" segment is prolonged parallel to the sleeve front line; the two upper sleeve and under sleeve tailor patterns are placed side by side along the back lines and aligned on the armscye horizontal line.

The rim and elbow horizontal lines are prolonged on the tailor pattern of the under sleeve, parallel to the armscye horizontal.

This sleeve will be restricted according to preference and fashion.

## Claims

1. Set of basic guide tables for developing tailor patterns, **characterized in that** it comprises:
- two basic guide tables as depicted in Figure 14 and in Figure 15 arranged for developing the tailor pattern of the front and back body for adolescents and man, in which:
- a set of interrupted curved lines A-B expressing the measure of the neck circumference from 36 cm to 57 cm, the point A representing the lower neck, the point B representing the vertex of the neck-shoulder angle,
- a set of straight lines G corresponding to the neck circumference from 36 cm to 57 cm, for the front and back shoulder lines, and,
- three curved lines representing the roundness of the armhole from 38 cm to 70 cm in front and back, respectively, and
- two basic guide tables as depicted in Figure 16 and in Figure 17 arranged for developing the tailor pattern of the front and back man sleeve, with one seam, for adolescents and man, in custom sizes, in which:
- groups of S shaped curved lines express the measure of the armhole from 38 cm to 70 cm in front and back, respectively,
- groups of vertical lines establish the sleeve center and the straight edge of the sleeve from 38 cm to 70 cm,
- two basic guide tables as depicted in Figure 18 and in Figure 19 arranged for developing tailor patterns for adolescents and man of trouser crotch, front and back, on custom sizes, comprising:
- a set of vertical lines from 50 cm to 120 cm parallel to each other, being denoted as segment A for front center and segment B for back center, and
- a set of roundnesses, from 50 cm to 120 cm, being developed inside a right angle formed by the front center lines with the segment A and by the back center lines with the segment B that express the crotch roundness designed on the depth of the person in relation with said measure of the hips;
- a basic guide table as depicted in Figure 20 arranged for developing the tailor pattern of the man upper sleeve with two seams, for adolescents and man, comprising:
- three groups of curved lines for the cuff of the armhole from 38 cm to 70 cm being interrupted by a dot representing the center of the sleeve and the straight edge,
- three groups of vertical segments representing the sleeve back side from 38 cm to 70 cm,
- on the left hand three sleeve front lines on which the roundnesses of the cuff begin,
- three armscye horizontal lines for completing the sleeve, and
- a basic guide table as depicted in Figure 21 arranged for developing the tailor pattern of the man under sleeve with two seams, for adolescents and man, comprising:
- four groups of curved lines for the armscye from 38 cm to 70 cm,
- four groups of vertical segments representing the sleeve front side from 38 cm to 70 cm,
- a set of vertical lines representing the sleeve back line that are designed to be correspondent to the curved lines of the armscyes, and
- four armscye horizontal lines for completing the sleeve.

2. A use of the set of basic guide tables according to claim 1 for developing tailor patterns, wherein a paper sheet being superimposed successively to the basic guide tables as depicted in Figures from 14 to 21 allows the manufacture of a tailor pattern concerning respectively the front and back body, the top and bottom of the armhole, the front and back trouser crotch, and the upper sleeve and under sleeve for adolescents and man, respectively, according to the following steps:
- positioning of said paper sheet on the front center line of the basic guide table as depicted in Figure 14:
- tracing on the base of the measure of the neck circumference of the first part of the neck roundness A-B;
- positioning a set square at right angles on the front center and line G that corresponds to the measure of the neck circumference;
- inserting half of the real front width of the shoulders of the person to intersect the line G in a point C1 that, connected to point B, allows to draw the line of the shoulder with its right slope;
- drawing the hip line, parallel to the front center, which is distant a quarter of the chest circumference, at a distance between 10 and 15 cm from the point C1 and a length of 20 cm; and
- insertion of the armhole;
- positioning said paper sheet on the back center line of the basic guide table as depicted in Figure 15:
- tracing the first part of the neck roundness A-B, on the base of the measure of the neck circumference;
- positioning a set square at right angles on the back center and line G that corresponds to the measure of the neck circumference;
- inserting half of the real back width of the shoulders of the person to intersect the line G in a point Cl that, connected to point B, allows to draw the line of the shoulder with its right slope;
- inserting the same front waist length, for tracing the back waist horizontal;
- positioning half of said paper sheet so that the sleeve center line of said paper sheet is made coincident with the front center line of the basic guide table as depicted in Figure 16:
- taking the dot at the bottom that is placed at the beginning of the armscye roundness, which is the front sleeve width; and
- tracing the armhole roundness relating to the person;
- positioning half of said paper sheet so that the sleeve center line of said paper sheet is made coincident with the back center line in the basic guide table as depicted in Figure 17 corresponding to the real size of the armscye for developing the tailor pattern of the back man sleeve, with one seam, for adolescents and man by:
- taking the dot at the bottom that is placed at the beginning of the armscye roundness, which is the back sleeve width; and
- tracing the armhole roundness relating to the person;
- drawing on said paper sheet the front center line, and in parallel, a back center line at a distance of half of the hip circumference;
- inserting the front crotch roundness by the basic guide table as depicted in Figure 18 and the back crotch roundness by the basic guide table as depicted in Figure 19 in correspondence to the real measure of the hip circumference of the person;
- positioning said paper sheet on the basic guide table as depicted in Figure 18 for the front, so that the tract of 10 cm (outside the rectangle) of the crotch horizontal line is made coincident with the segment A of the basic guide table as depicted in Figure 18 and the front center of the paper sheet with that of the basic guide table as depicted in Figure 18;
- tracing the front crotch roundness from the segment A to intersect the front center line;
- proceeding in the same way for the back, with the care that the segment B is placed on the crotch horizontal line in the tract outside the rectangle and making coincident the two back center lines, i.e. that of the paper sheet and that of the basic guide table as depicted in Figure 19;
- tracing the back crotch roundness;
- drawing the hip line, parallel to the straight edge of the paper sheet;
- drawing the waist horizontal line after inserting the crotch length, previously measured on the person;
positioning a quarter of said paper sheet for tailor patterns on the basic guide table as depicted in Figure 20, upper sleeve;
- making the straight edge of said paper sheet coincident with the sleeve front line taken on the basic guide table as depicted in Figure 20;
- tracing the "back side" segment indicated on the basic guide table as depicted in Figure 20, the roundness of the cuff and the dot representing the sleeve center and the armscye horizontal line, all corresponding to the real measure of the armhole of the person or of the size;
- drawing the sleeve center line from the dot taken on the cuff, parallel to the sleeve front line, as long as the sleeve length of the person, and inserting the elbow length on the same line drawn;
- drawing the rim horizontal line and the elbow horizontal line parallel to the armscye, by prolonging the back side segment to intersect the rim line;
- positioning a quarter of said paper sheet for tailor patterns on the basic guide table as depicted in Figure 21, under sleeve;
- making the straight edge of said paper sheet coincident with the sleeve back line taken on the basic guide table as depicted in Figure 21;
- tracing the "back side" segment indicated on the basic guide table as depicted in Figure 21, the armscye roundness and the armscye horizontal line, all corresponding to the measure of the real armhole of the person or of the size;
- prolonging the "back side" segment in parallel to the sleeve front line;
- placing side by side the two upper sleeve and under sleeve tailor patterns along the back lines and aligned with the armscye horizontal;
- prolonging the horizontal rim and elbow lines on the under sleeve tailor pattern, parallel to the horizontal armscye.

## Patentansprüche

1. Satz von grundlegenden Leittabellen zur Entwicklung von Schnittmustern, **dadurch gekennzeichnet, dass** er Folgendes umfasst:
- zwei grundlegende Leittabellen, wie in Figur 14 und in Figur 15 gezeigt, die zur Entwicklung von Schnittmustern der Körpervorder- und Rückseite für Jugendlichen und Männer ausgestaltet sind, in denen:
- eine Reihe von unterbrochenen, gekrümmten Linien A-B, die das Maß des Halsumfangs von 36 cm bis 57 cm darstellen, wobei der Punkt A den Unterhals und der Punkt B den Scheitel des Hals-Schulter-Winkels darstellt,
- eine Reihe von geraden Linien G, die dem Halsumfang von 36 cm bis 57 cm entsprechen, für die vorderen und hinteren Schulter-Linien, und
- drei gekrümmte Linien, die jeweils front- und rückseitig die Rundheit des Armlochs von 38 cm bis 70 cm darstellen, und
- zwei grundlegende Leittabellen, wie in Figur 16 und in Figur 17 gezeigt, die zur Entwicklung von Schnittmustern des männlichen Vorder- und Rückärmels für Jugendlichen und Männer mit einer Naht in Sondergrößen ausgestaltet sind, in denen:
- Gruppen von S-förmigen, gekrümmte Linien, die jeweils front- und rückseitig das Maß des Armlochs von 38 cm bis 70 cm darstellen,
- Gruppen von vertikalen Linien die Ärmelmitte und die gerade Kante des Ärmels von 38 cm bis 70 cm feststellen,
- zwei grundlegende Leittabellen, wie in Figur 18 und in Figur 19 gezeigt, die zur Entwicklung von Schnittmustern vom front- und rückseitigen Hosenschritt für Jugendlichen und Männer in Sondergrößen ausgestaltet sind, umfassend:
- eine Reihe von vertikalen Linien von 50 cm bis 120 cm, die zueinander parallel sind und als Segment A für die Vordermitte und als Segment B für die Rückmitte bezeichnet werden, und
- eine Reihe of Rundheiten von 50 cm bis 120 cm, die innerhalb eines von den Vordermittellinien und dem Segment A bzw. von den Rückmittellinien und dem Segment B eingeschlossenen rechten Winkels verlaufen, der die Schrittrundheit darstellt, die in Bezug auf dem Maß der Hüften an der Tiefe der Person angepasst ist;
- eine grundlegende Leittabelle, wie in Figur 20 gezeigt, die zur Entwicklung von Schnittmustern des männlichen oberen Ärmels für Jugendlichen und Männer mit zwei Nähten ausgestaltet ist, umfassend:
- drei Gruppen von gekrümmten Linien für die Manschette des Armlochs von 38 cm bis 70 cm durch einen Punkt unterbrochen sind, der die Mitte des Ärmels und die gerade Kante darstellt,
- drei Gruppen von vertikalen Segmenten, die die Ärmelrückseite von 38 cm bis 70 cm darstellen,
- linksseitig drei Frontlinien des Ärmels, an denen die Rundheiten der Manschette beginnt,
- drei horizontale Linien des Ärmelausschnitts zur Vervollständigung des Ärmels, und
- eine grundlegende Leittabelle, wie in Figur 21 gezeigt, die zur Entwicklung von Schnittmustern des männlichen unteren Ärmels für Jugendlichen und Männer mit zwei Nähten ausgestaltet ist, umfassend:
- vier Gruppen von gekrümmten Linien für den Ärmelausschnitt von 38 cm bis 70 cm,
- vier Gruppen von vertikalen Segmenten, die die Ärmelvorderseite von 38 cm bis 70 cm darstellen,
- eine Reihe von vertikalen Linien, die die Rücklinie des Ärmels darstellen und ausgestaltet sind, um den gekrümmten Linien der Ärmelausschnitte zu entsprechen, und
- vier horizontale Linien des Ärmelausschnitts zur Vervollständigung des Ärmels.

2. Verwendung des Satzes von grundlegenden Leittabellen nach Anspruch 1 zur Entwicklung von Schnittmustern, wobei ein Papierbogen, der anschließend dem grundlegenden Leittabellen übergelagert wird, wie in den Figuren 14 bis 21 gezeigt, die Herstellung eines Schnittmusters ermöglicht, das jeweils den Vorder- und Rückkörper, die Ober- und Unterseite des Armlochs, den front- und rückseitigen Hosenschritt, und den Oberärmel und den Unterärmel für Jugendlichen und Männer betrifft, gemäß den folgenden Schritten:
- Positionieren des Papierbogens auf der Vordermittellinie der grundlegenden Leittabelle, wie in Figur 14 gezeigt;
- Zeichnen auf der Basis des Maßes des Halsumfangs des ersten Teils der Halsrundheit A-B;
- Positionieren ein Zeichendreieck rechtwinkelig auf der Vordermitte und der Linie G, die dem Maß des Halsumfangs entspricht;
- Einfügen der Hälfte des Ist-Frontbreite der Schultern der Person, um die Linie G an einem mit dem Punkt B verbundenen Punkt C1 zu schneiden, der das Zeichnen der Linie der Schulter mit der richtigen Neigung ermöglicht;
- Zeichnen der Hüftelinie parallel zur Vordermitte, deren Abstand gleich eines Viertels des Brustumfangs ist, u.z. mit einem Abstand vom Punkt C1, der zwischen 10 und 15 cm liegt, und einer Länge von 20 cm; und
- Einfügen des Armlochs;
- Positionieren des Papierbogens auf der Rückmittellinie der grundlegenden Leittabelle, wie in Figur 15 gezeigt;
- Zeichnen des ersten Teils der Halsrundheit A-B anhand des Maßes des Halsumfangs;
- Positionieren ein Zeichendreieck rechtwinkelig auf der Rückmitte und der Linie G, die dem Maß des Halsumfangs entspricht;
- Einfügen der Hälfte des Ist-Rückbreite der Schultern der Person, um die Linie G an einem mit dem Punkt B verbundenen Punkt Cl zu schneiden, der das Zeichnen der Linie der Schulter mit der richtigen Neigung ermöglicht;
- Einfügen derselbe vorderen Taillenlänge, um die rückseitige Taillenhorizontale zu zeichnen;
- Positionieren der Hälfte des Papierbogens, so dass die Ärmelmittellinie des Papierbogens mit der Vordermittellinie der grundlegenden Leittabelle übereinstimmt, wie in Figur 16 dargestellt:
- Versetzen des Punkts nach unten, der am Anfang der Rundheit des Ärmelausschnitts angeordnet ist, die die frontseitige Ärmelbreite ist; und
- Zeichnen der Rundheit des Armlochs in Bezug auf die Person;
- Positionieren der Hälfte des Papierbogens, so dass die Ärmelmittellinie des Papierbogens mit der Rückmittellinie in der grundlegenden Leittabelle übereinstimmt, wie Figur 17 gezeigt, die der wirklichen Größe des Ärmelausschnitts entspricht, um das Schnittmuster des männlichen Rückärmels mit einem Naht für Jugendlichen und Männer durch Folgendes zu entwickeln:
- Versetzen des Punkts nach unten, der am Anfang der Rundheit des Ärmelausschnitts angeordnet ist, die die rückseitige Ärmelbreite ist; und
- Zeichnen der Rundheit des Armlochs in Bezug auf die Person;
- Zeichnen der Vordermittellinie auf dem Papierbogen und Zeichnen einer parallelen Rückmittellinie mit einem Abstand, der der Hälfte des Hüftumfangs entspricht;
- Einfügen der frontseitigen Schrittrundheit an der grundlegenden Leittabelle, wie in Figur 18 gezeigt, und Einfügen der rückseitigen Schrittrundheit an der grundlegenden Leittabelle, wie in Figur 19 gezeigt, entsprechend dem wirklichen Maß des Hüftumfangs der Person;
- Positionieren des Papierbogens auf die grundlegende Leittabelle, wie in Figur 18 bezüglich der Frontseite gezeigt wird, so dass der Abschnitt von 10 cm (außerhalb des Rechtecks) der horizontalen Schrittlinie mit dem Segment A der grundlegenden Leittabelle, wie in Figur 18 gezeigt, und die Vordermitte des Papierbogens mit demjenigen der grundlegenden Leittabelle übereinstimmt, wie in Figur 18 gezeigt;
- Zeichnen der frontseitigen Schrittrundheit des Segments A, um die Vordermittellinie zu schneiden;
- Auf dasselbe Art und Weise bei der Rückseite fortfahren, unter Beachtung der Tatsache, dass sich das Segment B auf der horizontalen Schrittlinie im Abschnitt außerhalb des Rechtecks befindet, und so dass die zwei Rückmittellinien, d.h. diejenige des Papierbogens und der grundlegenden Leittabelle, übereinstimmen, wie in Figur 19 gezeigt;
- Zeichnen der rückseitigen Schrittrundheit;
- Zeichnen der Hüftelinie parallel zur geraden Kante des Papierbogens;
- Zeichnen der horizontalen Taillenlinie nach dem Einfügen der Schrittlänge, die zuvor an der Person gemessen wurde;
Positionieren eines Viertels des Papierbogens für Schnittmuster auf die grundlegende Leittabelle, wie in Figur 20 gezeigt, Oberärmel:
- So machen, dass die gerade Kante des Papierbogens mit der Frontlinie des Ärmels aus der grundlegenden Leittabelle übereinstimmen, wie in Figur 20 gezeigt;
- Zeichnen des "rückseitigen" Segments, der auf der grundlegenden Leittabelle angezeigt wird, wie in Figur 20 gezeigt, wobei die Rundheit der Manschette und der Punkt die Ärmelmitte und die horizontale Linie des Ärmelausschnitts darstellen, die dem wirklichen Maß des Armlochs der Person oder der Größe entsprechen;
- Zeichnen der Ärmelmittellinie des Punkts aus der Manschette parallel zur frontseitigen Ärmellinie mit der gleichen Länge wie die Ärmellänge der Person, und Einfügen der Ellenbogenlänge auf derselben gezeichneten Linie;
- Zeichnen der horizontalen Randlinie und der horizontalen Ellenbogenlinie parallel zum Ärmelausschnitt, indem das rückseitige Segment verlängert wird, um die Randlinie zu schneiden;
- Positionieren eines Viertels des Papierbogens für Schnittmuster auf die grundlegende Leittabelle, wie in Figur 21 gezeigt, Unterärmel:
- So machen, dass die gerade Kante des Papierbogens mit der Rücklinie des Ärmels aus der grundlegenden Leittabelle übereinstimmen, wie in Figur 21 gezeigt;
- Zeichnen des "rückseitigen" Segments, der auf der grundlegenden Leittabelle angezeigt wird, wie in Figur 21 gezeigt, der Rundheit des Ärmelausschnitts und der horizontalen Linie des Ärmelausschnitts, die dem wirklichen Maß des wirklichen Armlochs der Person oder der Größe entsprechen;
- Verlängern des "rückseitigen" Segments parallel zur Frontlinie des Ärmels;
- Positionieren der zwei Schnittmuster des Oberärmels und des Unterärmels nebeneinander entlang der Rücklinien und fluchtend mit der Horizontale des Ärmelausschnitts;
- Verlängern der horizontalen Rand- und Ellenbogenlinien auf dem Schnittmuster des Unterärmels parallel zum horizontalen Ärmelausschnitt.

## Revendications

1. Ensemble de tables de guidage de base pour la création de patrons sur mesure, **caractérisée en ce qu'**elle comprend:
- deux tables de guidage de base, comme illustré à la figure 14 et à la figure 15, disposées pour la création du patron sur mesure du corps avant et arrière pour les adolescents et les hommes, dans lesquelles:
- un ensemble de lignes courbes discontinues A-B représentant la mesure de la circonférence du cou de 36 cm à 57 cm, le point A représentant le cou inférieur, le point B représentant le sommet de l'angle cou-épaule,
- un ensemble de lignes droites G correspondant à la circonférence du cou de 36 cm à 57 cm, pour les lignes d'épaule antérieures et postérieures, et
- trois lignes courbes représentant respectivement la rondeur de l'entournure de 38 cm à 70 cm avant et arrière, et
- deux tables de guidage de base, comme illustré à la figure 16 et à la figure 17, disposées pour la création du patron sur mesure de la manche avant et arrière pour les adolescents et les hommes, avec une couture, dans des formats spéciaux, dans lesquelles:
- des groupes de lignes courbes en forme de S, représentant respectivement la mesure de l'entournure de 38 cm à 70 cm avant et arrière,
- des groupes de lignes verticales établissant le centre de la manche et le bord droit de la manche de 38 cm à 70 cm,
- deux tables de guidage de base, comme illustré à la figure 18 et à la figure 19, disposées pour la création des patrons sur mesure d'entrejambe de pantalon, avant et arrière, pour les adolescents et les hommes, dans des formats spéciaux, comprenant:
- un ensemble de lignes verticales de 50 cm à 120 cm parallèles l'une à l'autre, étant indiquées comme segment A pour le centre antérieur et comme segment B pour le centre postérieur, et
- un ensemble de rondeurs, de 50 cm à 120 cm, étant crées à un angle droit formé par les lignes centrales antérieures avec le segment A et par les lignes centrales postérieures avec le segment B, qui représentent la rondeur d'entrejambe configurée selon la profondeur de la personne par rapport à ladite mesure des hanches;
- une table de guidage de base, comme illustré à la figure 20, disposée pour la création du patron sur mesure de la manche supérieure pour les adolescents et les hommes, avec deux coutures, comprenant:
- trois groupes de lignes courbes pour le poignet de l'entournure de 38 cm à 70 cm, étant interrompues par un point représentant le centre de la manche et le bord droit,
- trois groupes de segments verticaux représentant le côté postérieur de la manche de 38 cm à 70 cm,
- sur le côté gauche trois lignes antérieures de la manche sur lesquelles commencent les rondeurs du poignet,
- trois lignes horizontales de l'emmanchure pour compléter la manche, et
- une table de guidage de base, comme illustré à la figure 21, disposée pour la création du patron sur mesure de la manche inférieure pour les adolescents et les hommes, avec deux coutures, comprenant:
- quatre groupes de lignes courbes pour l'emmanchure de 38 cm à 70 cm,
- quatre groupes de segments verticaux représentant le côté antérieur de la manche de 38 cm à 70 cm,
- un ensemble de lignes verticales représentant la ligne postérieure de la manche, qui sont configurées pour être correspondantes aux lignes courbes des emmanchures, et
- quatre lignes horizontales de l'emmanchure pour compléter la manche.

2. Utilisation de l'ensemble de tables de guidage de base selon la revendication 1 pour la création de patrons sur mesure, dans laquelle une feuille de papier étant superposée successivement aux tables de guidage de base, comme illustré aux figures 14 à 21, permet la production d'un patron sur mesure concernant respectivement le corps avant et arrière, la partie supérieure et inférieure de l'entournure, la partie antérieure et la partie postérieure de l'entrejambe de pantalon, et la manche supérieure et la manche inférieure pour les adolescents et les hommes, selon les étapes suivantes:
- positionner ladite feuille de papier sur la ligne centrale antérieure de la table de guidage de base, comme illustré à la figure 14;
- tracer sur la base de la mesure de la circonférence du cou de la première partie de la rondeur du cou A-B;
- positionner une équerre à angle droit sur le centre antérieur et la ligne G qui correspond à la mesure de la circonférence du cou;
- insérer la moitié de la largeur antérieure réelle des épaules de la personne pour croiser la ligne G dans un point C1 qui, relié au point B, permet de dessiner la ligne de l'épaule avec son inclinaison correcte;
- dessiner la ligne des hanches, parallèlement au centre antérieur, qui est éloigné pour un quart du tour de poitrine, à une distance entre 10 et 15 cm du point C1 et une longueur de 20 cm; et
- insérer l'entournure;
- positionner ladite feuille de papier sur la ligne centrale postérieure de la table de guidage de base, comme illustré à la figure 15;
- tracer la première partie de la rondeur du cou A-B, sur la base de la mesure de la circonférence du cou;
- positionner une équerre à angle droit sur le centre postérieur et la ligne G qui correspond à la mesure de la circonférence du cou;
- insérer la moitié de la largeur postérieure réelle des épaules de la personne pour croiser la ligne G dans un point C1 qui, relié au point B, permet de dessiner la ligne de l'épaule avec son inclinaison correcte ;
- insérer la même longueur de taille antérieure, pour tracer la ligne horizontale postérieure de taille;
- positionner la moitié de ladite feuille de papier de manière que la ligne centrale de la manche de ladite feuille de papier coïncide avec la ligne centrale antérieure de la table de guidage de base, comme illustré à la figure 16:
- porter le point vers la partie inférieure qui est placée au début de la rondeur de l'emmanchure, qui est la largeur de la manche antérieure ; et
- tracer la rondeur de l'entournure par rapport à la personne;
- positionner la moitié de ladite feuille de papier de manière que la ligne centrale de la manche de ladite feuille de papier coïncide avec la ligne centrale postérieure dans la table de guidage de base, comme illustré à la figure 17, correspondant à la dimension réelle de l'emmanchure pour la création du patron sur mesure de la manche postérieure, avec une couture, pour les adolescents et les hommes, comprenant:
- porter le point vers la partie inférieure qui est placée au début de la rondeur de l'emmanchure, qui est la largeur de la manche postérieure; et
- tracer la rondeur de l'entournure par rapport à la personne;
- dessiner sur ladite feuille de papier la ligne centrale antérieure, et parallèlement, une ligne centrale postérieure à une distance de la moitié du tour de hanches;
- insérer la rondeur d'entrejambe antérieure par la table de guidage de base, comme illustré à la figure 18, et la rondeur d'entrejambe postérieure par la table de guidage de base, comme illustré à la figure 19, en correspondance de la mesure réelle du tour de hanches de la personne;
- positionner ladite feuille de papier sur la table de guidage de base, comme illustré à la figure 18, pour la partie antérieure, de manière que la section de 10 cm (à l'extérieur du rectangle) de la ligne horizontale de l'entrejambe coïncide avec le segment A de la table de guidage de base, comme illustré à la figure 18, et le centre antérieur de la feuille de papier avec celui de la table de guidage de base, comme illustré à la figure 18;
- tracer la rondeur d'entrejambe antérieure du segment A pour croiser la ligne centrale antérieure;
- procéder de la même manière pour la partie postérieure, en prenant soin que le segment B soit placé sur la ligne horizontale de l'entrejambe dans la section à l'extérieur du rectangle et que les deux lignes centrales postérieures coïncident, c'est-à-dire les lignes de la feuille de papier et les lignes de la table de guidage de base, comme illustré à la figure 19;
- tracer la rondeur d'entrejambe postérieure;
- dessiner la ligne des hanches, parallèlement au bord droit de la feuille de papier;
- dessiner la ligne horizontale de taille après avoir inséré la longueur de l'entrejambe, précédemment mesurée sur la personne;
positionner un quart de ladite feuille de papier pour patrons sur mesure sur la table de guidage de base, comme illustré à la figure 20, manche supérieure:
- faire coïncider le bord droit de ladite feuille de papier avec la ligne de manche antérieure sur la table de guidage de base, comme illustré à la figure 20;
- tracer le segment du « côté postérieur » indiqué sur la table de guidage de base, comme illustré à la figure 20, la rondeur du poignet et le point représentant le centre de la manche et la ligne horizontale de l'emmanchure, correspondant à la mesure réelle de l'entournure de la personne ou de la dimension;
- dessiner la ligne centrale de la manche du point pris sur le poignet, parallèlement à la ligne antérieure de la manche, avec une longueur égale à la longueur de la manche de la personne, et insérer la longueur de coude sur la même ligne dessinée;
- dessiner la ligne horizontale d'ourlet et la ligne horizontale de coude parallèlement à l'emmanchure, en prolongeant le segment du côté postérieur pour croiser la ligne ourlet;
- positionner un quart de ladite feuille de papier pour patrons sur mesure sur la table de guidage de base, comme illustré à la figure 21, manche inférieure:
- faire coïncider le bord droit de ladite feuille de papier avec la ligne de manche postérieure sur la table de guidage de base, comme illustré à la figure 21;
- tracer le segment du «côté postérieur» indiqué sur la table de guidage de base, comme illustré à la figure 21, la rondeur de l'emmanchure et la ligne horizontale de l'emmanchure correspondant à la mesure de l'entournure réelle de la personne ou de la dimension ;
- prolonger le segment du «côté postérieur» parallèlement à la ligne antérieure de la manche;
- positionner côte à côte les deux patrons sur mesure de manche supérieure et de manche inférieure le long des lignes postérieures et alignés avec la ligne horizontale de l'emmanchure;
- prolonger les lignes horizontales d'ourlet et de coude sur le patron sur mesure inférieur de la manche, parallèlement à l'emmanchure horizontale.
